# EUROPÄISCHE PATENTSCHRIFT

(11) **EP 1 451 617 B1**
(45) Veröffentlichungstag und Bekanntmachung des Hinweises auf die Patenterteilung: **06.06.2007**
(21) Anmeldenummer: 02803805.7
(22) Anmeldetag: 27.11.2002
(51) Int. Cl.: G02B 5/08, G02B 26/08, G02B 7/182

(54) **SPIEGEL, OPTISCHES ABBILDUNGSSYSTEM UND DEREN VERWENDUNG**
MIRROR, OPTICAL IMAGING SYSTEM AND USE THEREOF
MIROIR, SYSTEME DE REPRESENTATION OPTIQUE ET LEUR UTILISATION

(30) Priorität: 28.11.2001 DE 10158216
(43) Veröffentlichungstag der Anmeldung: 01.09.2004
(73) Patentinhaber: Media Lario s.r.l., 23842 Bosisio Parini (LC) (IT)
(72) Erfinder: Valenzuela, Carlos Alberto, 81825 München (DE); Valenzuela, Miriam Noemi, 81825 München (DE)
(74) Vertreter: Kunz, Herbert
(86) Internationale Anmeldenummer: PCT/EP2002/013401
(87) Internationale Veröffentlichungsnummer: WO 2003/046618

(56) Entgegenhaltungen:
- EP-A- 1 152 555
- DE-A- 19 506 765
- DE-A- 19 735 831
- US-A- 5 117 606
- US-A- 5 181 145
- US-A- 5 500 520
- US-A- 5 854 713
- US-A- 6 060 702
- US-A1- 2001 030 820
- PATENT ABSTRACTS OF JAPAN vol. 1996, no. 01, 31. Januar 1996 (1996-01-31) & JP 07 239431 A (CANON INC), 12. September 1995 (1995-09-12) -& DATABASE WPI Week 199545 Derwent Publications Ltd., London, GB; AN 1995-349201 XP002231785 & JP 07 239431 A (CANON INC)

## Beschreibung

Die Erfindung betrifft einen Spiegel zur Verwendung für optische Abbildungssysteme, ein optisches Abbildungssystem umfassend einen solchen Spiegel und die Verwendung solcher Spiegel und optischer Abbildungssysteme.

An Spiegel für optische Abbildungssysteme werden besondere Qualitätsanforderungen gestellt. Ein immer wieder auftretendes Problem ist die Verformung des Spiegels unter mechanischer Belastung, durch Gravitationseffekte oder aufgrund von thermischen Einflüssen.

Außerdem sollen Spiegel für optische Abbildungssysteme leicht sein, um sie universell einsetzbar zu machen. Das Gewichtsproblem tritt z.B. bei Spiegeln auf, die für Teleskope für Raumfahrtanwendungen gemäß US 5 181 145 oder DE 19 506 765 eingesetzt werden. Aber auch bei der optischen Telekommunikation sind leichte Bauelemente wünschenswert, um die leichte und sichere Montage der Bauelemente zu ermöglichen und die statischen Anforderungen an die Befestigungspunkte gering zu halten.

Bekannt sind Spiegel mit einer auf einem Träger aufgedampften Spiegelfläche. Als Materialien für den Träger kommen z.B. Metall und Metallegierungen, wie Aluminium, Kupfer, Messing oder Molybdän, oder Nichtmetalle wie Beryllium in Betracht. Für die Spiegelfläche können Materialien wie z.B. Gold, Silber, Nickel, Kupfer, Messing oder Kadmium verwendet werden. Die Spiegelträger können durch Drehen, insbesondere Diamantendrehen, durch Gießen, z.B. aus Kunststoff, oder durch Polieren von z.B. Glas oder Zerodur hergestellt werden. Nachteil solcher Spiegel sind einerseits ihr hohes Gewicht, wenn sie eine ausreichende mechanische Stabilität aufweisen sollen, und andererseits die zeitaufwendige Herstellung des Trägers. Jeder einzelne Spiegel muß z.B. durch Drehen oder Polieren mit hoher Präzision hergestellt werden. Die optische Genauigkeit des Spiegels ist durch die Geometrie beschränkt, da nicht jede beliebige Form mit hoher optischer Genauigkeit herstellbar ist. Die optische Genauigkeit ist außerdem durch das Aufstäuben, Aufdampfen, Aufspritzen oder anderweitiges Aufbringen der Spiegelfläche auf den Träger beschränkt, da die erforderliche Oberflächengüte nicht ohne weiteres erreicht werden kann.

Weiter sind Spiegel bekannt, die durch Replikationstechniken hergestellt werden. Dabei wird der Spiegel umgekehrt als vorstehend beschrieben aufgebaut. Die Spiegelfläche wird in Form eines reflektierenden Materials auf einen Mandrel aufgebrächt und darüber eine Verstärkungsschicht aufgebracht. Die Verstärkungsschicht kann im Electroformingverfahren, durch Aufspritzen von Glas oder Kunststoff oder durch Stanzen gemäß der US 6 060 702 oder DE 19 735 831 aufgebracht werden. Die Replikationstechniken haben den Vorteil, daß die Spiegel eine höhere Genauigkeit bei kleineren Materialdicken aufweisen und damit ein geringeres Gewicht haben. Gleichzeitig sind sie aber mechanisch und damit optisch weniger robust.

Optische Abbildungssysteme, die aus mehr als einem optischen Element bestehen, sind empfindlich hinsichtlich der korrekten Justierung der optischen Elemente beim Zusammenbau. Sie erfordern große Geschicklichkeit und Erfahrung beim Zusammenbau, um Systemfehler gering zu halten.

Es ist Aufgabe der Erfindung, Spiegel und optische Abbildungssysteme, die mindestens einen Spiegel umfassen, zu schaffen; die leicht sind und gleichzeitig höchsten optischen Anforderungen genügen.

Diese Aufgabe wird erfindungsgemäß durch einen Spiegel zur Verwendung für optische Abbildungssysteme gemäß den Merkmalen des Anspruchs 1 gelöst.

Der Spiegel ist randseitig einstückig mit einem den Spiegel umfassenden röhrenformigen Verstärkungselement verbunden. Durch die erfindungsgemäße Bauweise ist es möglich, eine hohe Stabilität zu erreichen, ohne eine hohe Materialstärke des Spiegelträgers erforderlich zu machen. Der Spiegel erhält seine Stabilität aus einer mit ihm randseitig fest verbundenen Verstärkung.

In alternativen Ausführungsformen kann die Verstärkung annähernd beliebig geformt sein. Sie kann den Spiegelrand ganz oder teilweise umfassen. So kann der Spiegel an seine Verwendung angepaßt werden, etwa wenn er in ein optisches Abbildungssystem integriert werden soll und das Verstärkungselement entweder die Positionierung anderer Bauteile nicht behindern soll, oder andere Bauteile direkt am Verstärkungselement angebracht werden sollen.

Durch das erfindungsgemäße Verstärkungselement werden die Abbildungseigenschaften des Spiegels nicht verändert. Gleichzeitig wird aber eine hohe Stabilität geschaffen, die einen dünnen Spiegelträger ermöglicht, der ein geringes Gewicht aufweist und auf thermische Einflüsse unkritisch reagiert. Die Verstärkung kann am äußeren Spiegelrand liegen und kann zusätzlich oder alternativ auch an einem inneren Spiegelrand angeordnet sein, wenn der Spiegel aufgrund seiner Verwendung, z.B. für ein Teleskop, ein Loch aufweist.

Anmeldungsgemäß wird der erfindungsgemäße Spiegel im Electroformingverfahren hergestellt. Andere Herstellungsverfahren, wie z.B. Stanzen, Gießen, Replikation durch Aufspritzen von Glas oder Kunststoff, Drehen, insbesondere Diamantendrehen, und/oder Polieren sind aber auch grundsätzlich möglich.

Die Stabilität des erfindungsgemäßen Spiegels kann zusätzlich dadurch verbessert werden, daß er Verformungen in seiner Spiegelfläche aufweist, wie z.B. Sicken, Kanten oder Wölbungen. Die optischen Abbildungseigenschaften werden dadurch nur in kleinen Flächenbereichen gestört während die Abbildung in allen anderen Bereichen unverändert und frei von Formschwankungen durch Verformung aufgrund mechanischer oder thermischer Einflüsse sichergestellt wird.

Der erfindungsgemäße Spiegel kann insbesondere einen Spiegelträger geringer Stärke aufweisen. Die genaue Stärke hängt von der Geometrie des Spiegels und des Verstärkungselements ab. Als Anhaltspunkte für verwendbare Trägerstärken und ausschließlich beispielhaft seien hier ein Spiegelträger von ca. 0,5 mm Stärke für Spiegel mit einem Durchmesser von ca. 1 m und Trägerstärken von 0,3 bis 0,1 mm für kleinere Spiegel genannt.

Eine weitere Lösung der erfindungsgemäßen Aufgabe besteht in einem optischen Abbildungssystem umfassend einen vorstehend beschriebenen Spiegel und ein weiteres optisches Element. Das optische Abbildungssystem ist dadurch gekennzeichnet, daß das Verstärkungselement gleichzeitig die Position des Spiegels und des weiteren optischen Elements zueinander festlegt und am Verstärkungselement Positioniermittel angeordnet sind, die mit dem weiteren optischen Element oder mit daran angeordneten zweiten Positioniermitteln zusammenwirken. Derart ausgestaltete Abbildungssysteme sind zugleich leicht und genügen hohen optischen Anforderungen, da sie leicht und hochpräzise zu montieren sind und ihre wesentlichen Bestandteile große Stabilität aufweisen.

Das Verstärkungselement am Spiegel kann hierzu so ausgelegt sein, daß es wie eine optische Bank wirkt und an vorgegebenen Positionen Positioniermittel aufweist, die eine exakte Positionierung des weiteren optischen Elements bewirken. Das Verstärkungselement ist röhrenförmig gestaltet, wobei es insbesondere zylindrisch oder konisch gestaltet sein kann. Am Ende sind die Positioniermittel zur Positionierung des weiteren optischen Elements angeordnet.

Das weitere optische Element kann insbesondere ein Spiegel, eine Linse oder eine Glasplatte mit besonderen optischen Eigenschaften sein. Eine solche Glasplatte kann eine Kristallstruktur mit besonderen Reflexionseigenschaften - aufweisen, die eine hohe Transmission in einer Richtung und eine hohe Reflexion in der anderen Richtung aufweist (semireflective mirror). Die Glasplatte kann auch Flüssigkristalle, wie z.B. Cholesteric Liquid Cristal (CLC) oder andere Polymere enthalten, die alle Wellenlängen elektromagnetischer Strahlung reflektieren, mit Ausnahme derjenigen Lichtkomponenten, die innerhalb eines bestimmten Wellenlängenbereichs zentriert um eine primäre Wellenlänge liegen und/oder einen bestimmten Drehsinn der zirkulären Polarisatiensrichtung haben.

Je nachdem, um welche Art von optischem Element es sich handelt, kann das optische Element direkt mit den Positioniermitteln des Verstärkungselements zusammenwirken oder selbst Positioniermittel aufweisen, die mit den Positioniermitteln des Verstärkungselements zusammenwirken. Direkt mit den Positioniermitteln des Verstärkungselements können z.B. optische Elemente zusammenwirken, deren Abbildungseigenschaften sich bei Verschiebung in einer Ebene nicht ändern, also z.B. Planspiegel oder Glasplatten. In diesem Fall muß das Verstärkungselement lediglich den Abstand und den Winkel zwischen Spiegel und Glasplatte vorgeben.

Bei optischen Elementen, deren Abbildungseigenschaften von der genauen Position im Raum abhängig sind, ist es vorteilhaft, wenn sie über eigene Positioniermittel verfügen, die zusammen mit den Positioniermitteln des Verstärkungselements des Spiegels die genaue Position der Bauteile zueinander definieren. Vorteilhaft sind die Positioniermittel mit dem weiteren optischen Element einstückig verbunden.

Die Positioniermittel sind vorzugsweise Präzisionsflächen. Z.B. kann der Randabschluß eines röhrenartigen Verstärkungselements als Präzisionsfläche ausgeführt werden und so hochpräzise die Position eines Planspiegels, der auf dem Randabschluß zu liegen kommt, definieren.

Weist das weitere optische Element ebenfalls Positioniermittel auf, können diese auch als Präzisionsflächen ausgeführt sein. Beispielsweise kann ein weiterer Spiegel ein ähnliches Verstärkungselement wie der erste Spiegel aufweisen, dessen Rand ebenfalls als Präzisionsfläche ausgeführt ist und auf der Randfläche des ersten Spiegels zu liegen kommt.

Im Falle von zusammenwirkenden Positioniermitteln weist eine vorteilhafte Ausgestaltung der Erfindung zueinander komplementäre Formgebungen der Positioniermittel zueinander auf. So können die Positioniermittel z.B. konkav, konvex oder keilförmig sein oder sich in anderer Weise in eine Richtung verjüngen.

In einer besonders bevorzugten Ausführungsform sind die Positioniermittel so ausgebildet, daß sich benachbart zu ihren Berührungspunkten Hohlräume oder Spalte ausbilden. Dadurch wird eine Verklebung ermöglicht, die dadurch erleichtert und verbessert werden kann, daß die Hohlräume oder Spalte solche Ausmaße haben, daß sie Kapillarwirkung aufweisen. Die Elemente können dann zunächst exakt positioniert werden. Anschließend kann flüssiger Kleber aufgebracht werden, der durch die Kapillarwirkung in die Spalte oder Hohlräume hineingezogen wird und eine großflächige Verklebung erzeugt.

Vorzugsweise sollen der Spiegel und das weitere optische Element aus Materialien mit nahe beieinander liegenden Wärmeausdehnungskoeffizienten bestehen, um den Einfluß von thermischen Verformungen auf die Abbildungseigenschaften des Abbildungssystems gering zu halten. Diese Bauweise kann wiederum durch im Electroformingverfahren hergestellte Spiegel mit einstückig angeformtem Verstärkungselement verwirklicht werden. Das weitere optische Element und/oder seine Positioniermittel können ebenfalls mit diesem Verfahren hergestellt werden, so daß das ganze. Abbildungssystem oder jedenfalls wesentliche Bauteile davon aus demselben Material bestehen.

Auch der zur Verbindung der Bauteile verwendete Kleber oder andere zur dauerhaften Verbindung verwendete Bauteile sollten vorzugsweise einen ähnlichen Wärmeausdehnungskoeffizienten haben.

Falls der Spiegel Verformungen zur Erhöhung seiner Stabilität aufweist, die die Abbildungseigenschaften in diesem Bereich beeinträchtigen, sind diese Verformungen vorzugsweise in einem Bereich angeordnet, der durch andere Bauteile des Abbildungssystems, etwa durch Halteelemente weiterer Bauteile, obskuriert wird.

Gemäß einem Ausführungsbeispiel des erfindungsgemäßen. Abbildungssystems kann ein Fokus des Strahlenganges in der Nähe des Verstärkungselements und/oder der Positioniermittel angeordnet sein. Einen solchen Strahlengang weisen etwa sogenannte Schiefspiegler auf. Ein Fokus des Strahlenganges wird typischerweise verwendet um Licht in Lichtleitelemente wie z.B. Lichtleitfasern ein- bzw. auszukoppeln. Mit der beschriebenen erfindungsgemäßen Auslegung ist es möglich, stabile Haltevorrichtungen für solche Lichtleitelemente am Verstärkungselement anzuordnen. Die Lichtleitelemente werden sicher in ihrer Position gehalten und es ist möglich, Justierelemente vorzusehen, die bedient werden können, ohne die Gesamtjustierung des Abbildungssystems zu gefährden.

Eine andere besonders vorteilhafte Lösung ist die Anordnung des zweiten optischen Elements direkt im Verstärkungselement, z.B. durch eine oder mehrere dort vorgesehene reflektierende, entsprechend geformte Flächen.

Durch geschickte Auslegung des Abbildungssystems kann es so erreicht werden, daß das gesamte System aus einem. Bauteil besteht, das alle Abbildungselemente einstückig umfaßt. Eine Justierung der Bauteile zueinander ist nicht möglich, aber auch nicht erforderlich. Die Bauteile sind immer optimal zueinander positioniert.

Insbesondere kann es sich bei dem erfindungsgemäßen optischen Abbildungssystem um ein Teleskop mit nicht nur einer einzigen optischen Achse handeln.

Der erfindungsgemäße Spiegel und das erfindungsgemäße optische Abbildungssystem werden bevorzugt für optische Übertragungstechniken eingesetzt.

Die Erfindung wird im folgenden anhand der beigefügten Abbildungen, näher erläutert:
- Fig. 1: zeigt einen erfindungsgemäßen Spiegel mit einstückig verbundenem Verstärkungselement im Längsschnitt;
- Fig. 2: zeigt einen Spiegel mit einem Verstärkungselement mit Streben in Aufsicht;
- Fig. 3: zeigt ein erfindungsgemäßes optisches Abbildungssystem im Längsschnitt;
- Fig. 4: zeigt ein optisches Abbildungssystem mit selbstausrichtenden Positioniermitteln im Längsschnitt;
- Fig. 5 A bis C: zeigen verschiedene setbstausrichtende Positioniermittel im Längsschnitt;
- Fig. 6: zeigt ein optisches Abbildungssystem mit im Verstärkungselement angeordnetem zweiten Spiegel im Längsschnitt;
- Fig. 7: zeigt ein weiteres optisches Abbildungssystem im Längsschnitt.

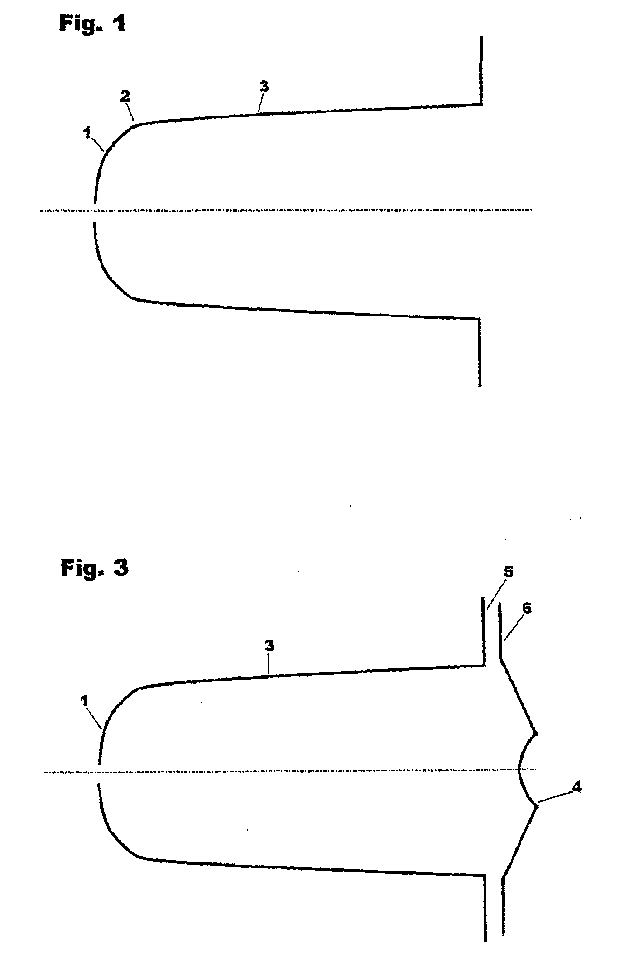

Der in **Fig. 1** im Längsschnitt dargestellte erfindungsgemäße Spiegel **1** ist an seinem Rand **2** einstückig mit einem Verstärkungselement **3** verbunden. Das Verstärkungselement umfaßt den Spiegel vollständig. Der Spiegel ist mit dem Verstärkungselement gemeinsam im Electroformingverfahren hergestellt.

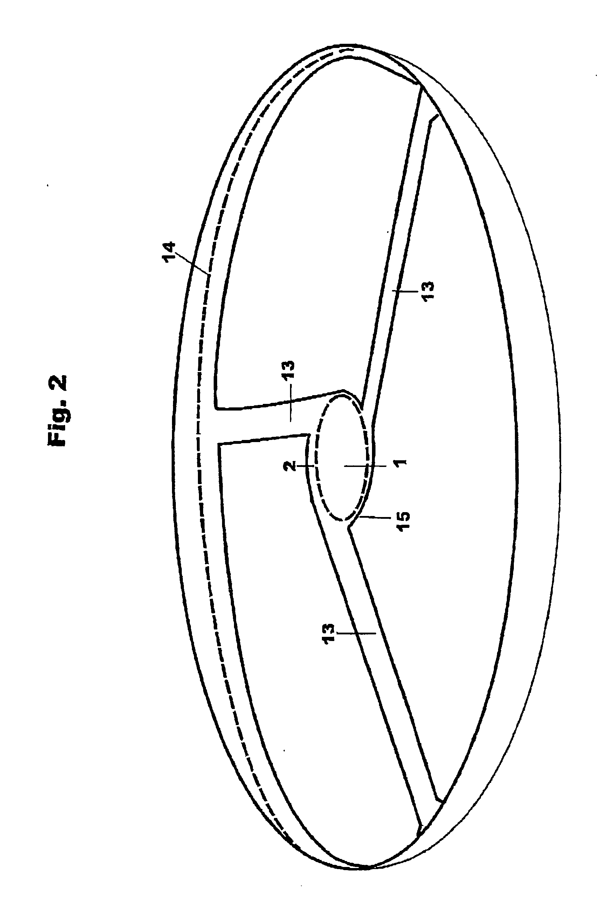

**Fig.2** zeigt einen Spiegel **1,** der randseitig einstückig mit einem inneren Verstärkungselement **15** verbunden ist. Das innere Verstärkungselement umfaßt den Spiegelrand **2** vollständig. Am inneren Verstärkungselement greifen drei Streben **13** an, die außen in einem ringförmigen Teil **14** enden. Die Streben **13** bilden mit der Ebene des Spiegels ein dreidimensionales Objekt aus, d.h. die Streben sind bezüglich der Ebene des Spiegels in einem spitzen Winkel geneigt. Sie sind aus Stabilitätsgründen parallel zu ihrer Längsrichtung gewölbt. Sie greifen am inneren Verstärkungselement **15** in annähernd tangentialer Richtung an. Dadurch wirken auf den Spiegel **1** bei thermischen oder Gravitationseinflüssen keine Kräfte, die eine Verformung oder Positionsänderung des Spiegels herbeiführen, sondern ausschließlich Kräfte, die eine Rotation des Spiegels bewirken, was bei einem rotationssymmetrischen Spiegel keine Veränderung der Abbildungseigenschaften herbeiführt. Der äußere Ring **14** kann neben der Stabilisierung der Streben **13** auch zur exakten Positionierung und/oder Befestigung des Spiegels in einem optischen System, wie z.B. einem Teleskop, dienen.

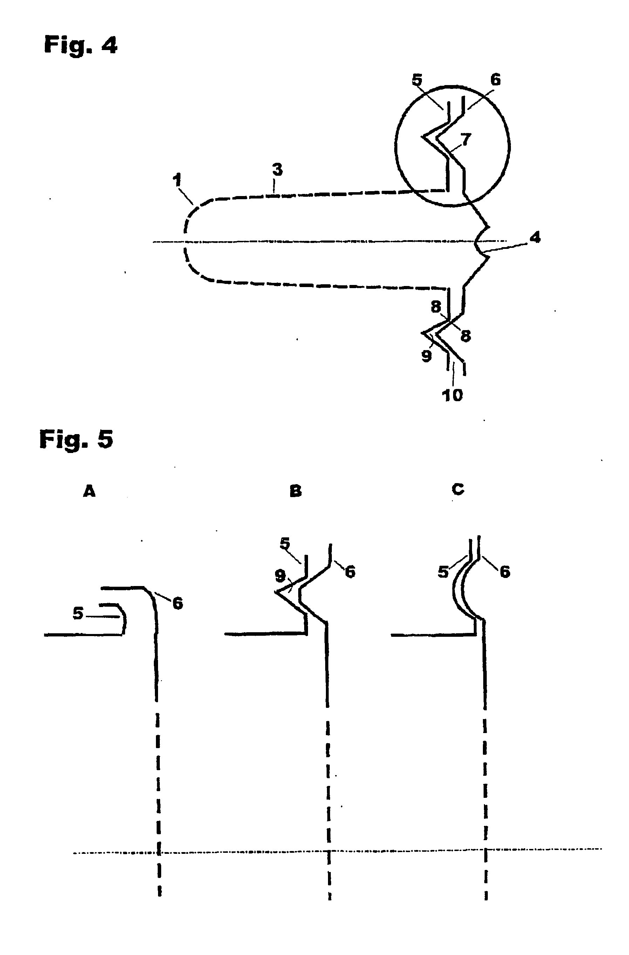

**Fig. 3** zeigt ein Beispiel für ein erfindungsgemäßes optisches Abbildungssystem, nämlich ein Teleskop. Das Teleskop besteht aus einem Primärspiegel **1** und einem weiteren optischen Element **4,** nämlich einem Sekundärspiegel. Das Verstärkungselement **3** ist randseitig mit dem Primärspiegel **1** verbunden und stabilisiert diesen. Gleichzeitig legt es die Position des Primärspiegels **1** und des Sekundärspiegels **4** zueinander fest. Das Verstärkungselement **3** verfügt zur Positionierung der Spiegel **1, 4** zueinander über erste Positioniermittel **5,** die mit zweiten Positioniermitteln **6** am Sekundärspiegel **4** zusammenwirken. Beide Bauteile dieses Teleskops sind im Electroformingverfahren hergestellt. Dadurch ist es möglich, gleichzeitig sowohl hochpräzise Spiegel. **1, 4** herzustellen als auch die einander zugewandten Flächen der Positioniermittel **5, 6** als Präzisionsflächen auszuführen, um eine hochpräzise Positionierung der Spiegel **1, 4** zueinander zu erreichen. Die Spiegel des Teleskops müssen nur in einer Ebene senkrecht zur optischen Achse justiert werden. Der Abstand der Spiegel **1, 4** zueinander ist hochpräzise vorgegeben. Der Sekundärspiegel **4** kann im Aufbau ein Spiegel gemäß Fig. 2 sein.

**Fig. 4** zeigt ein Teleskop mit grundsätzlich gleichem Aufbau wie in Fig. 3. Die Positioniermittel **5, 6** sind aber selbstjustierend, wie in der Abbildung schematisch dargestellt ist. Die Positioniermittel **5, 6** verfügen über eine zueinander komplementäre V-Form **7.** Dadurch wird der Sekundärspiegel **4** automatisch in seine hochpräzise vorherbestimmte Position zum Primärspiegel **1** gebracht. Es ist keinerlei Justierung mehr erforderlich.

Die Fixierung der Bauelemente in der vorgegebenen Positionierung kann entweder durch Klammern am Rand der Positioniermittel **5, 6** oder durch Verklebung erfolgen. Für die Verklebung ist es vorteilhaft, die Positioniermittel **5, 6** so auszubilden, daß sich benachbart zu den Berührungspunkten **8** der Positioniermittel **5, 6** miteinander Hohlräume **9** oder Spalten **10** ausbilden, in die Kleber eingebracht werden kann. Das kann z.B., wie in der Figur zu erkennen, dadurch erreicht werden, daß die Positioniermittel **5, 6** nicht exakt komplementäre Formen aufweisen sondern leicht unterschiedliche Winkel ihrer V-Form haben.

Die Klebwirkung und die Justierungspräzision wird dadurch erhöht, daß die Hohlräume **9** oder Spalte **10** Kapillarwirkung aufweisen. Das Aufbringen von Kleber vor dem Zusammenbau der Elemente des optischen Systems würde Justierungsungenauigkeiten durch Kleberreste mit sich bringen, der zwischen die sich berührenden Flächen der Positioniermittel **5, 6** gerät. Deshalb ist es vorteilhaft, den Kleber durch die Kapillarwirkung selbsttätig in die Hohlräume und Spalte eindringen zu lassen. Durch verringerte Kontaktflächen bei leicht unterschiedlich geformten Positioniermitteln **5, 6** wird außerdem verhindert, daß sich durch unpräzises Arbeiten bei der Montage eine Kleberschicht zwischen die Positioniermittel **5, 6** legen kann. Durch die geringen Kontaktflächen wird eventuell dazwischen geratener Kleber herausgedrückt und in die benachbarten Hohlräume **9.** oder Spalten **10** gedrückt.

**Fig.5** zeigt schematisch verschiedene Ausführungsformen der selbstjustierenden Positioniermittel **5, 6.** Die Positioniermittel **5, 6** gemäß **Fig. 5A** verfügen über abgebogene Randbereiche. Die Positioniermittel **5, 6** gemäß **Fig. 5B** sind V-förmig ausgebildet, wobei die Spitze des inneren Positioniermittets **6** gekappt ist. Dadurch bildet sich zwischen beiden Positioniermitteln ein Hohlraum **9,** der zur Aufnahme von Klebstoff dient. **Fig. 5C** zeigt selbstjustierende Positioniermittel **5, 6** mit einer Krümmung, die an beiden Elementen leicht unterschiedlich ist.

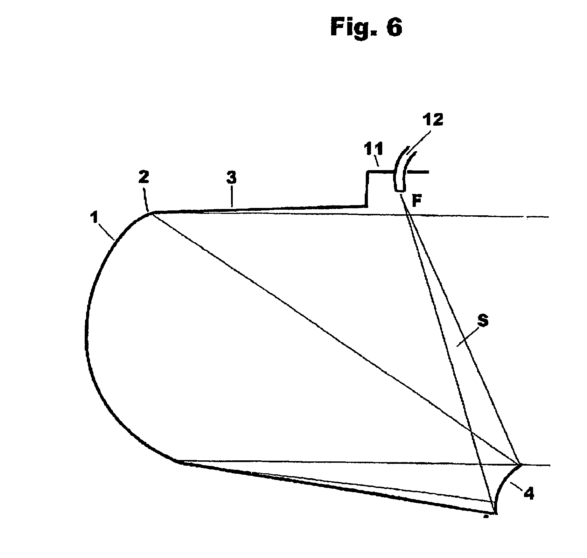

**Fig. 6** zeigt ein optisches Abbildungssystem mit einem Primärspiegel **1** und einem seinen Rand **2** umfassenden Verstärkungselement **3,** bei dem der Sekundärspiegel **4** im Verstärkungselement **3** angeordnet ist. Ein solches Off-Axis Teleskop kann bei geeigneter Formgebung hochpräzise einstückig im Electroformingverfahren hergestellt werden. Es muß nicht justiert werden und weist keine Kontaktflächen zwischen einzelnen Elementen auf, die eine Dejustierung herbeiführen und die optischen Eigenschaften verschlechtern könnten.

Das Teleskop verfügt am Verstärkungselement **3** über ein Halteelement **11** für ein Ein- oder Auskoppelelemente **12,** im abgebildeten Fall für eine Glasfaser für eine Telekommunikationsanwendung.

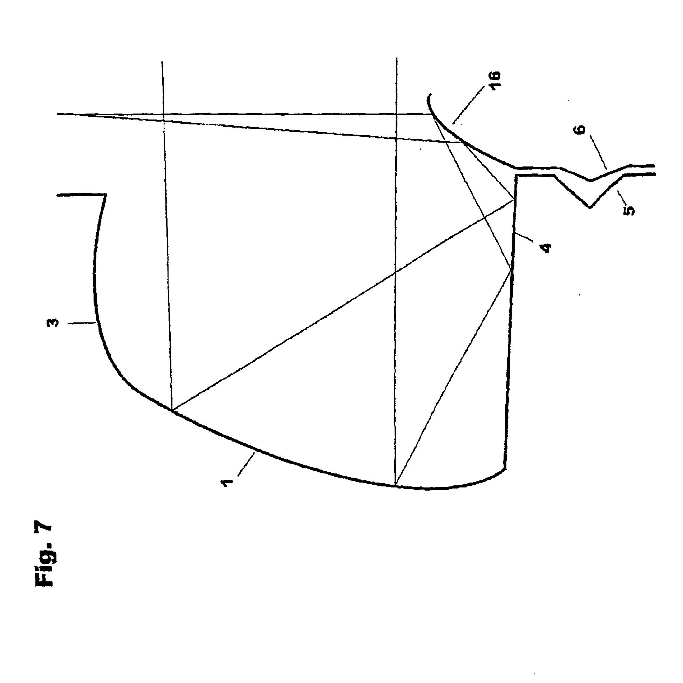

**Fig. 7** zeigt ein weiteres optisches Abbildungssystem, nämlich ein Schiefspiegler-Teleskop im Schnitt. Der Primärspiegel **1** ist vollständig von einem Verstärkungselement **3** umfaßt, das ihn stabilisiert. Unmittelbar im Verstärkungselement ist eine Fläche als Spiegelfläche ausgebildet, die den Sekundärspiegel **4** des Teleskops bildet. Weiter ist am Verstärkungselement **3** ein Positioniermittel **5** angebracht, das zur Positionierung des Tertiärspiegels **16** dient. Der Primärspiegel **1** ist zusammen mit dem Verstärkungselement **3** und dem Positioniermittel **5** einstückig im Electroformingverfahren hergestellt. Der Tertiärspiegel **16** ist ebenfalls im Electroformingverfahren hergestellt und verfügt über ein einstückig angeformtes Positioniermittel **6,** mit dem er wie oben beschrieben hochpräzise zum weiteren Teil des Teleskops, das den Primär und den Sekundärspiegel umfaßt, positioniert werden kann.

## Patentansprüche

1. Spiegel (1) zur Verwendung für optische Abbildungssysteme, **dadurch gekennzeichnet, dass** der Spiegel (1) randseitig mit einem den Spiegel (1) umfassenden röhrenförmigen Verstärkungselement (3) einstückig ausgebildet ist und an dem dem Spiegel gegenüberliegenden Rand des röhrenförmigen Verstärkungselementes vorgesehene erste Positioniermittel (9) aufweist, die einstückig mit dem Verstärkungselement (3) und als Präzisionsfläche ausgebildet sind, und zwar um über die Formgebung des ersten Positioniermittels die Justierung des Spiegels herbeizuführen, wobei der Spiegel, das röhrenförmige Verstärkungselement und das erste Positioniermittel gemeinsam einstückig im Electroforming Verfahren ausgebildet sind.

2. Spiegel (1) nach Anspruch 1 **dadurch gekennzeichnet, dass** der Spiegel (1) bereichsweise Verformungen seiner Spiegelfläche zur Stabilisierung aufweist.

3. Optisches Abbildungssystem umfassend einen Spiegel (1) gemäß einem der Ansprüche 1 bis 2 und ein weiteres optisches Element (4), **dadurch gekennzeichnet, dass** das Verstärkungselement (3) erste Positioniermittel aufweist und gleichzeitig die Position des Spiegels (1) und des weiteren optischen Elements (4) zueinander festlegt und am Verstärkungselement (3) erste Positioniermittel (5) einstückig ausgebildet sind, die mit am weiteren optischen Element (4) angeordneten zweiten Positioniermitteln (6) zusammenwirken und die ersten Positioniermittel (5) zu den zweiten Positioniermittel (6) zueinander komplementäre Formen zur Selbstjustierung des weiteren optischen Elements und des Spiegels aufweisen.

4. Optisches Abbildungssystem nach Anspruch 3, **dadurch gekennzeichnet, dass** das weitere optische Element (4) einstückig mit den zweiten Positioniermitteln (6) ausgebildet ist.

5. Optisches Abbildungssystem nach einem der Ansprüche 3 oder 4, **dadurch gekennzeichnet, dass** das weitere optische Element (4) ein Spiegel oder eine Linse ist.

6. Optisches Abbildungssystem nach einem der Ansprüche 3 bis 5 **dadurch gekennzeichnet, dass** das weitere optische Element (4) ein Element ist, dessen optische Eigenschaften sich bei Verschiebung in einer Ebene nicht ändern, insbesondere ein Planspiegel oder eine Glasplatte.

7. Optisches Abbildungssystem nach einem der Ansprüche 3 bis 6, **dadurch gekennzeichnet, dass** die ersten und/oder zweiten Positioniermittel (5,6) Präzisionsflächen sind.

8. Optisches Abbildungssystem nach einem der Ansprüche 3 bis 7, **dadurch gekennzeichnet, dass** die ersten und/oder zweiten Positioniermittel (5,6) so ausgebildet sind, dass sich benachbart zu den Berührungspunkten (8) der Positioniermittel Hohlräume (9) oder Spalte (10) ausbilden.

9. Optisches Abbildungssystem nach Anspruch 8, **dadurch gekennzeichnet, dass** die Hohlräume (9) oder Spalte (10) Kapillarwirkung aufweisen.

10. Optisches Abbildungssystem nach einem der Ansprüche 3 bis 9, **dadurch gekennzeichnet, dass** der Spiegel (1) und das weitere optische Element (4) aus Materialien mit nahe beieinander liegenden Wärmeausdehnungskoeffizienten bestehen.

11. Optisches Abbildungssystem nach einem der Ansprüche 3 bis 10, **dadurch gekennzeichnet, dass** das weitere optische Element (4) und/oder die zweiten Positioniermittel (6) im Electroformingverfahren hergestellt sind.

12. Optisches Abbildungssystem nach einem der Ansprüche 3 bis 11, **dadurch gekennzeichnet, dass** es sich um einen Schiefspiegler handelt.

13. Optisches Abbildungssystem umfassend einen Spiegel (1) gemäß einem der Ansprüche 1 bis 2 und ein weiteres optisches Element (4), **dadurch gekennzeichnet, dass** das weitere optische Element (4) unmittelbar am Verstärkungselement (3) des Spiegels (1) angeordnet ist.

14. Optisches Abbildungssystem nach Anspruch 13, **dadurch gekennzeichnet, dass** das weitere optische Element (4) ein Spiegel ist, der durch eine oder mehrere reflektierende Flächen im Verstärkungselement (3) gebildet ist.

15. Optisches Abbildungssystem nach einem der Ansprüche 3 bis 14, **dadurch gekennzeichnet, dass** das Abbildungssystem ein Teleskop ist.

16. Optisches Abbildungssystem nach einem der Ansprüche 3 bis 15, **dadurch gekennzeichnet, dass** am Verstärkungselement (3) und/oder einem oder mehreren der Positioniermittel (5,6) Halteelemente (11) für ein oder mehrere Ein- oder Auskoppelelemente (12), insbesondere für Lichtleitfasern oder Faserbündel, angeordnet sind.

17. Verwendung eines Spiegels (1) nach einem der Ansprüche 1 bis 2 oder eines optischen Abbildungssystems nach einem der Ansprüche 3 bis 16 für optische Übertragungstechniken.

## Claims

1. Mirror (1) for use for optical imaging systems, **characterized in that** the mirror (1) is formed integrally at the edge with a tubular reinforcing element (3) surrounding the mirror (1) and has first positioning means (9) which are formed integrally with the reinforcing element (3) and as a precision surface and are provided on that edge of the tubular reinforcing element which is opposite the mirror, in particular for enabling the adjustment of the mirror via the shaping of the first positioning means, the mirror, the tubular reinforcing element and the first positioning means together being formed integrally by an electroforming process.

2. Mirror (1) according to Claim 1, **characterized in that** the mirror (1) has, in regions, deformations of its mirror surface for stabilization.

3. Optical imaging system comprising a mirror (1) according to either of Claims 1 and 2, and a further optical element (4), **characterized in that** the reinforcing element (3) has first positioning means and at the same time fixes the position of the mirror (1) and of the further optical element (4) relative to one another, and first positioning means (5) are formed integrally on the reinforcing element (3), which positioning means (5) cooperate with second positioning means (6) arranged on the further optical element (4), and the first positioning means (5) have shapes complementary to the second positioning means (6) for self-adjustment of the further optical element and of the mirror.

4. Optical imaging system according to Claim 3, **characterized in that** the further optical element (4) is formed integrally with the second positioning means (6).

5. Optical imaging system according to either of Claims 3 and 4, **characterized in that** the further optical element (4) is a mirror or a lens.

6. Optical imaging system according to any of Claims 3 to 5, **characterized in that** the further optical element (4) is an element whose optical properties do not change on displacement in a plane, in particular a plane mirror or a glass plate.

7. Optical imaging system according to any of Claims 3 to 6, **characterized in that** the first and/or second positioning means (5, 6) are precision surfaces.

8. Optical imaging system according to any of Claims 3 to 7, **characterized in that** the first and/or second positioning means (5, 6) are formed in such a way that cavities (9) or gaps (10) form adjacent to the contact points (8) of the positioning means.

9. Optical imaging system according to Claim 8, **characterized in that** the cavities (9) or gaps (10) have a capillary action.

10. Optical imaging system according to any of Claims 3 to 9, **characterized in that** the mirror (1) and the further optical element (4) consist of materials having coefficients of thermal expansion which are close to one another.

11. Optical imaging system according to any of Claims 3 to 10, **characterized in that** the further optical element (4) and/or the second positioning means (6) are produced in the electroforming process.

12. Optical imaging system according to any of Claims 3 to 11, **characterized in that** it is an oblique reflector.

13. Optical imaging system comprising a mirror (1) according to either of Claims 1 and 2 and a further optical element (4), **characterized in that** the further optical element (4) is arranged directly on the reinforcing element (3) of the mirror (1).

14. Optical imaging system according to Claim 13, **characterized in that** the further optical element (4) is a mirror which is formed by one or more reflecting surfaces in the reinforcing element (3).

15. Optical imaging system according to any of Claims 3 to 14, **characterized in that** the imaging system is a telescope.

16. Optical imaging system according to any of Claims 3 to 15, **characterized in that** retaining elements (11) for one or more incoupling or outcoupling elements (12), in particular for optical fibres or fibre bundles, are arranged on the reinforcing element (3) and/or on one or more of the positioning means (5, 6).

17. Use of a mirror (1) according to either of Claims 1 and 2 or of an optical imaging system according to any of Claims 3 to 16 for optical transmission techniques.

## Revendications

1. Miroir (1) destiné à être utilisé pour des systèmes de reproduction optiques, **caractérisé en ce que** le miroir (1), du côté du bord, est réalisé d'une seule pièce avec un élément de renfort (3) de forme tubulaire, entourant le miroir (1) et comporte des premiers moyens de positionnement (9), prévus sur le bord, de l'élément de renfort de forme tubulaire, situé en vis-à-vis du miroir, lesquels premiers moyens étant réalisés d'une seule pièce avec l'élément de renfort (3) et comme surface de précision, et ce pour entraîner l'ajustement du miroir, via la mise en forme des premiers moyens de positionnement, le miroir, l'élément de renfort de forme tubulaire et le premier moyen de positionnement étant réalisés ensemble d'une seule pièce par procédé d'électroformage.

2. Miroir (1) selon la revendication 1, **caractérisé en ce que** le miroir (1) comporte, par zones, des déformations de sa surface de miroir, aux fins de stabilisation.

3. Système de reproduction optique comprenant un miroir (1) selon l'une des revendications 1 à 2 et un autre élément optique (4), **caractérisé en ce que** l'élément de renfort (3) comporte des premiers moyens de positionnement et détermine à la fois la position du miroir (1) et de l'autre élément optique (4) l'un par rapport à l'autre, et **en ce que** des premiers moyens de positionnement (5) qui coopèrent avec des seconds moyens de positionnement (6) agencés sur l'autre élément optique (4) sont réalisés d'une seule pièce sur l'élément de renfort (3), et **en ce que** les premiers moyens de positionnement (5) présentent des formes complémentaires par rapport aux seconds moyens de positionnement (6) aux fins d'auto-ajustement de l'autre élément optique et du miroir.

4. Système de reproduction optique selon la revendication 3, **caractérisé en ce que** l'autre élément optique (4) est réalisé d'une seule pièce avec les seconds moyens de positionnement (6).

5. Système de reproduction optique selon l'une des revendications 3 ou 4, **caractérisé en ce que** l'autre élément optique (4) est un miroir ou une lentille.

6. Système de reproduction optique selon l'une des revendications 3 à 5, **caractérisé en ce que** l'autre élément optique (4) est un élément dont les caractéristiques optiques ne varient pas lors d'un déplacement dans un plan, en particulier un miroir plan ou une plaque de verre.

7. Système de reproduction optique selon l'une des revendications 3 à 6, **caractérisé en ce que** les premiers et/ou les seconds moyens de positionnement (5, 6) sont des surfaces de précision.

8. Système de reproduction optique selon l'une des revendications 3 à 7, **caractérisé en ce que** les premiers et/ou les seconds moyens de positionnement (5, 6) sont réalisés de telle façon que des espaces creux (9) ou des interstices (10) se forment au voisinage des points de contact (8) des moyens de positionnement.

9. Système de reproduction optique selon la revendication 8, **caractérisé en ce que** les espaces creux (9) ou interstices (10) ont un effet de capillarité.

10. Système de reproduction optique selon l'une des revendications 3 à 9, **caractérisé en ce que** le miroir (1) et l'autre élément optique (4) sont constitués de matériaux présentant des coefficients de dilatation thermiques proches les uns des autres.

11. Système de reproduction optique selon l'une des revendications 3 à 10, **caractérisé en ce que** l'autre élément optique (4) et/ou les seconds moyens de positionnement (6) sont fabriqués par procédé d'électroformage.

12. Système de reproduction optique selon l'une des revendications 3 à 11, **caractérisé en ce qu'**il s'agit d'un miroir oblique.

13. Système de reproduction optique comportant un miroir (1) selon l'une des revendications 1 à 2 et un autre élément optique (4), **caractérisé en ce que** l'autre élément optique (4) est agencé directement sur l'élément de renfort (3) du miroir (1).

14. Système de reproduction optique selon la revendication 13, **caractérisé en ce que** l'autre élément optique (4) est un miroir qui est constitué d'une ou de plusieurs surfaces réfléchissantes dans l'élément de renfort (3) .

15. Système de reproduction optique selon l'une des revendications 3 à 14, **caractérisé en ce que** le système de reproduction est un télescope.

16. Système de reproduction optique selon l'une des revendications 3 à 15, **caractérisé en ce que** des éléments de retenue (11) pour un ou plusieurs éléments de couplage ou de découplage (12), en particulier pour fibres optiques ou faisceaux de fibres, sont agencés sur l'élément de renfort (3) et/ou un ou plusieurs des moyens de positionnement (5, 6).

17. Utilisation d'un miroir (1) selon l'une des revendications 1 à 2, ou d'un système de reproduction optique selon l'une des revendications 3 à 16, pour des techniques de transmission optiques.
